# EUROPÄISCHE PATENTANMELDUNG

(11) **EP 0 854 432 A2**
(43) Veröffentlichungstag der Anmeldung: **22.07.1998**
(21) Anmeldenummer: 98100159.7
(22) Anmeldetag: 07.01.1998
(51) Int. Cl.: G06K 7/00

(54) **Einrichtung zur punktförmigen drahtlosen Übertragung von Informationen an mindestens ein stationäres Lesegerät**

(30) Priorität: 21.01.1997 DE 19701705
(71) Anmelder: SIEMENS AKTIENGESELLSCHAFT, 80333 München (DE)
(72) Erfinder: Niemeyer, Heinrich, 90559 Burgthann (DE)

(57) **Zusammenfassung**

Zum Lesen von Datenträgern (D1,D2) an spurgeführten Objekten (F1,F2) sind Lesegeräte (ST1 bis ST4) vorgesehen, die an einen Rechner (R) angeschlossen sind. Damit auch eine Lage- und Geschwindigkeitserfassung der Objekte (F1,F2) ermöglicht wird, erfolgt das Lesen so, daß einem Lesegerät als Master-Lesegerät (ST1) mehrere Slave-Lesegeräte (ST2 bis ST4) in vorgegebenen Abständen (x1,x2,x3) in Spurrichtung zugeordnet sind. Alle derartigen Lesegeräte (ST1 bis ST4) fragen zyklisch die jeweils detektierbaren Datenträger (D1,D2) ab und melden die Abfrageergebnisse an den Rechner (R).

## Beschreibung

Die Erfindung bezieht sich auf eine Einrichtung zur punktförmigen drahtlosen Übertragung von in mobilen, an spurgeführten Objekten angeordneten Datenträgern eingeprägten Informationen an mindestens ein stationäres Lesegerät, das an einen Rechner angeschlossen ist, dem die detektierten Informationen in einem durch einen Umsetzer zugeschnittenen Format über einen ersten Informationskanal zuleitbar sind.

Bei technischen Produktionsprozessen, insbesondere im Fahrzeugbau, hat es sich bewährt, daß ein zu erstellendes oder zu bearbeitendes Objekt jeweils mit einem Datenträger versehen wird, dem Informationen über das Objekt eingeprägt werden. Während des Erstell- bzw. Bearbeitungsvorganges kann dann fortlaufend diese Information über Lesegeräte abgefragt werden, um die Produktion zu steuern. Die Informationsübertragung erfolgt dabei drahtlos. Dabei haben sich elektrische hochfrequente Signalübertragungen und Infrarotlichtübertragungen bereits seit langem bewährt.

Bei Produktionsprozessen, die kontinuierlich nach Art eines Fließbandprozesses ablaufen, kann bereits durch das einmalige Lesen der Information eines Datenträgers auf die weitere Position des zugeordneten Objekts durch eine Auswertung der Bandbewegung geschlossen werden. Beim Bewegen der Objekte in nicht fester räumlicher Korrelation, z.B. bei Fördern mit einer Hängebahn, wäre diese Methode nicht möglich, daher müßte zu einer Positions- bzw. Geschwindigkeitserfassung der Objekte eine sehr große Anzahl von direkt mit dem Rechner verbundenen Lesegeräten erforderlich sein.

Aufgabe der Erfindung ist es, mit relativ wenigen, direkt mit dem Rechner verbundenen stationären Lesegeräten eine Vielzahl von Abfrageorten zu bedienen, um eine gute Lage- bzw. Geschwindigkeitsinformation über die mit den Datenträgern versehenen Objekte zu gewinnen.

Gemäß der Erfindung wird diese Aufgabe für eine Einrichtung der eingangs genannten Art so gelöst, daß jeweils mindestens einem dieser Lesegeräte, das dann jeweils ein Master-Lesegerät darstellt, in Spurrichtung in einem vorgegebenen räumlichen Abstand mindestens ein weiteres Lesegerät als Slave-Lesegerät zugeordnet ist, das die von diesem detektierten Informationen ebenfalls über den Umsetzer an den Rechner weiterleitet, wobei Zusatzkennungen zum Spezifizieren der Informationen des Master-Lesegerätes und der jeweils zugeordneten Slave-Lesegeräte vorgesehen sind.

Eine erste Ausbildung der Erfindung ist dadurch gekennzeichnet, daß die Informationsabfrage durch die Master-Lesegeräte und die zugehörigen Slave-Lesegeräte in einem vorgebbaren Zyklus erfolgt. Dadurch kann ein Informationsbus für die Lesegeräte technisch äußerst einfach aufgebaut sein.

Dadurch, daß den abgefragten Informationen jeweils eine Zeitinformation über den Zeitpunkt des Informationserhalts hinzugefügt ist, können außer der Lageinformation auch Geschwindigkeitsinformationen im Rechner bestimmt werden.

Im Interesse von kurzen Datenwörtern kann für die Zeitinformation eine inkrementelle Zeitinformation vorgesehen sein.

Ebenso, wie es sich bei bestehenden Systemen bewährt hat, daß über einen Rückkanal ein Schreiben der Datenträger möglich ist, kann dies auch beim erfindungsgemäßen System erfolgen, wobei es sich hier als ausreichend erwiesen hat, daß nur über die Master-Lesegeräte ein Schreiben der Datenträger über einen solchen Rückkanal auslösbar ist.

Als weitreichendes Informationsübertragungsmittel hoher Zuverlässigkeit hat sich sowohl für das Lesen als auch das Schreiben der Datenträger eine Infrarotstrecke als günstig erwiesen.

Bei einem Stillstand des Prozesses, d.h. bei Unterbrechung der Objektbewegung, können die Lesegeräte deaktivierbar sein, um die Energieresourcen des Datenübertragungssystems zu schonen.

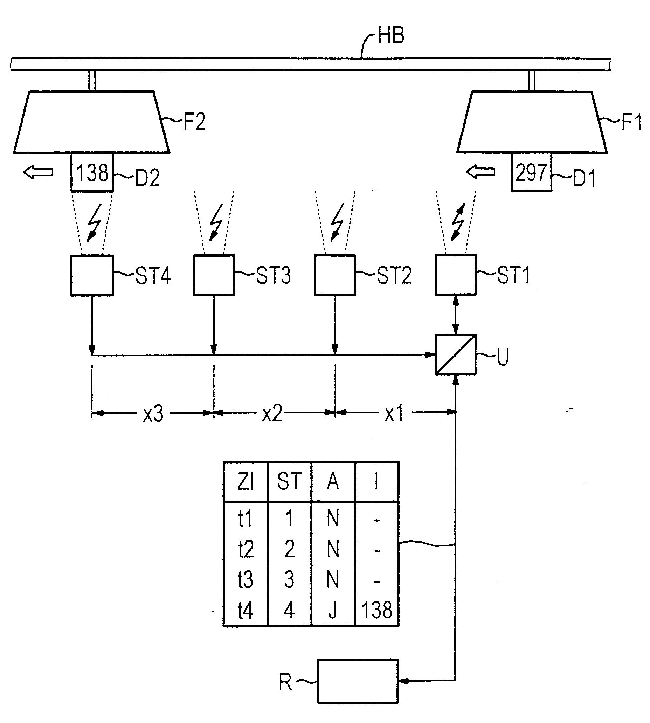

Ein Ausführungsbeispiel der Erfindung ist in der Zeichnung dargestellt und wird im folgenden näher erläutert.

Die Darstellung zeigt in Form eines Blockschaubildes zwei Fahrzeuge F1 und F2, die von einer Hängebahn HB in der durch offene Pfeile angedeuteten Richtung bewegt werden. Dabei ist am Fahrzeug F1 ein Datenträger D1 vorgesehen, dem beispielsweise eine dezimale Information 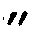 297" eingeschrieben sein möge. Dem Fahrzeug F2 sei ein Datenträger D2 zugeordnet, dem die Information 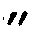 138" eingeprägt ist. Selbstverständlich können die eingeprägten Informationen auch wesentlich komplexer als beim Ausführungsbeispiel gestaltet sein.

Stationär gegenüber den mobilen Objekten sind stationäre Lesegeräte ST1 bis ST4 vorgesehen, die innerhalb eines durch gestrichelte Linie angedeuteten Erfassungsbereiches geeignet sind, die Informationen in den Datenträgern, so den Datenträgern D1 und D2, zu lesen, wie dies durch einen unidirektionalen gezackten Pfeil angedeutet ist bzw. zu lesen und neu zu beschreiben, wie es für das stationäre Lesegerät ST1 durch einen bidirektional gezackten Pfeil angedeutet ist. Das stationäre Lesegerät ST1, wird im folgenden als Master-Lesegerät bezeichnet Diesem Lesegerät ist räumlich ein Umsetzer U zugeordnet, der eine Ankopplung über einen ersten Informationskanal an einen Rechner R des Systems ermöglicht. Die stationären Lesegeräte ST2 bis ST4 werden im folgenden als SlaveLesegeräte bezeichnet. Diese sind in definierten Abständen x1, x2 und x3 zum Master-Lesegerät ST1 entlang der Förderstrecke der Hängebahn HB angeordnet. Diese Abstände x1 bis x3 sind im Rechner R als Information vorhanden.

Alle Lesegeräte ST1 bis ST4 sind während des Betriebs der Hängebahn HB aktiv geschaltet und erfassen fortlaufend, ob sich ein Datenträger, so ein Datenträger D1 bzw. D2, im jeweiligen Erfassungsbereich findet. Dies kann jeweils zyklisch in einem Bussystem erfolgen, das den Umsetzer U mit allen Lesegeräten ST1 bzw. ST4 verbindet.

Im Ausführungsbeispiel befindet sich nur der Datenträger D2 im Lesebereich des Slave-Lesegerätes ST4, während das MasterLesegerät ST1 und die Slave-Lesegeräte ST2 und ST3 keine Information detektieren. Demzufolge kann vom Umsetzer U die in einer Tabelle angeordnete gesammelte Information an den Rechner R geliefert werden. Zu den Spalten dieser Tabelle sei folgendes vermerkt. Die Spalte ST zeigt die jeweilige Lesegerätzuordnung, die Spalte A zeigt, ob ein Antwortsignal vorliegt (J = JA; N = NEIN) und die Spalte I gibt die empfangene Information an. Der Tabelle ist somit leicht entnehmbar, daß beim Ausführungsbeispiel das Master-Lesegerät ST1 keine Information empfängt. Gleiches gilt für die Slave-Lesegeräte ST2 und ST3, während das Slave-Lesegerät ST4 die Information 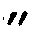 138" des Datenträgers D2 detektiert hat.

Als Zusatzinformation ZI kann auch jeder detektierten Information der Zeitpunkt ihres Erfassens zugeordnet werden. Im Ausführungsbeispiel kann der Information 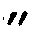 138" die Zeit t4 zugeordnet sein. Sofern die Einzelabfragen innerhalb eines Zyklusses von Abfrage sehr dicht zusammenfallen oder wenn in einem System kein zyklisches Abfragen, sondern ein zeitgleiches Abfragen der beteiligten Lesegeräte erfolgt, kann selbstverständlich jeweils eine gemeinsame Erfassungszeit angenommen werden.

Die dem Rechner R zugeleiteten, aus den Datenträgern gelesenen Informationen und die die Zeit betreffenden Zusatzinformationen geben zusammen mit den im Rechner R abgelegten, durch die Konfiguration gegebenen Lageinformationen x1 bis x3 die Möglichkeit einer Ortsbestimmung der Objekte sowie zusätzlich auch eine Geschwindigkeitsbestimmung der Objekte. Die Kenntnis über die Istwerte von Weg und Geschwindigkeit im Gesamtsystem ermöglicht es, Bearbeitungsvoränge orts- und geschwindigkeitskonform im Prozeß auszulösen.

## Patentansprüche

1. Einrichtung zur punktförmigen drahtlosen Übertragung von in mobilen, an spurgeführten Objekten angeordneten Datenträgern eingeprägten Informationen an mindestens ein stationäres Lesegerät, das an einen Rechner angeschlossen ist, dem die detektierten Informationen in einem durch einen Umsetzer zugeschnittenen Format über einen ersten Informationskanal zuleitbar sind, **dadurch gekennzeichnet,** daß jeweils mindestens einem dieser Lesegeräte, das dann jeweils ein Master-Lesegerät (ST1) darstellt, in Spurrichtung in einem vorgegebenen räumlichen Abstand mindestens ein weiteres Lesegerät als Slave-Lesegerät (ST2 bis ST4) zugeordnet ist, das die von diesem detektierten Informationen (K) ebenfalls über den Umsetzer (U) an den Rechner (R) weiterleitet, wobei Zusatzkennungen (Z) zum Spezifizieren der Informationen des Master-Lesegerätes (ST1) und der jeweils zugeordneten Slave-Lesegeräte (ST2 bis ST4) vorgesehen sind.

2. Einrichtung nach Anspruch 1, **dadurch gekennzeichnet,** daß die Informationsabfrage durch die Master-Lesegeräte (ST1) und die zugehörigen Slave-Lesegeräte (ST2 bis ST4) in einem vorgebbaren Zyklus erfolgt.

3. Einrichtung nach Anspruch 1 oder 2, **dadurch gekennzeichnet,** daß den abgefragten Informationen jeweils eine Zeitinformation (ZI) über den Zeitpunkt des Informationserhalts hinzufügbar ist.

4. Einrichtung nach Anspruch 3, **dadurch gekennzeichnet,** daß als Zeitinformation eine inkrementelle Zeitinformation vorgesehen ist.

5. Einrichtung nach einem der vorstehenden Ansprüche, **dadurch gekennzeichnet**, daß über die Master-Lesegeräte (ST1) ein Schreiben der Datenträger (D1,D2) über einen Rückkanal auslösbar ist.

6. Einrichtung nach einem der vorstehenden Ansprüche, **dadurch gekennzeichnet,** daß das Lesen und/oder Schreiben der Datenträger (D1,D2) über eine Infrarotstrecke erfolgt.

7. Einrichtung nach einem der vorstehenden Ansprüche, **dadurch gekennzeichnet,** daß bei Unterbrechung der Objektbewegung die Lesegeräte (ST1 bis ST4) deaktivierbar sind.
